# EUROPEAN PATENT APPLICATION

(11) **EP 2 759 995 A1**
(43) Date of publication of application: **30.07.2014**
(21) Application number: 14151821.7
(22) Date of filing: 20.01.2014
(51) Int. Cl.: G08C 17/02, G08C 23/04

(54) **Device for remotely controlling an electronic apparatus and control method thereof**

(30) Priority: 29.01.2013 KR 20130010079
(71) Applicant: Samsung Electronics Co., Ltd, Gyeonggi-do 443-742 (KR)
(72) Inventor: Jung, Do-sung, Seoul (KR); Kim, Hong-pyo, Gyeonggi-do (KR); Park, Yi-sak, Seoul (KR); Chung, Sue-young, Seoul (KR)
(74) Representative: Brandon, Paul Laurence

(57) **Abstract**

A control device for remotely controlling an electronic apparatus includes a communication part configured to communicate with the electronic apparatus; a position sensor configured to sense a position of the control device; and a controller configured to determine a first input interface on a first plate surface or a second input interface on a second plate surface that is directed toward a first direction and determine a first end part or a second end part that is directed toward a second direction according to position sensing by the position sensor, provide the first or the second input interface that is determined to be directed toward the first direction in a display direction determined based on the first or the second end part that is directed toward the second direction, and disable the first or the second input interface which is determined to be not directed toward the first direction.

## Description

### BACKGROUND

### Field

Apparatuses and methods consistent with exemplary embodiments relate to a device for remotely controlling various types of electronic apparatuses including a display apparatus and a control method thereof, and more particularly, to a device which remotely controls an electronic apparatus and is configured to enhance user convenience in manipulating the same and a control method thereof.

### Description of the Related Art

An electronic apparatus collectively refers to all devices that may perform various functions as required by a user by controlling movement of electrons through energy such as electricity. For example, the electronic apparatus may include home appliances such as a washing machine, a refrigerator and a dish washer; an audio/video (A/V) device such as a set-top box, an optical media player and a television (TV); a personal computer (PC); and a mobile device such as a mobile phone and a portable media player; and other various types of electronic apparatuses.

As an example of the electronic apparatus, a display apparatus such as a TV tunes, decodes and performs other various processes for a broadcasting signal that is supplied from an external source and provides an image of a desired broadcasting channel based on the processed broadcasting signal. To enable a user to control various operations performed by the display apparatus, a control device is provided to remotely control the display apparatus. Accordingly, a user manipulates a user input interface that is provided in various manners on the control device and transmits a command to the display apparatus to perform a desired operation.

In the control device, a location and a direction of the user input interface are fixed. Therefore, when a user grips the control device in an improper manner, e.g., when a user grips the control device upside down or back to front, the user needs to check a gripping direction and grip the control device again in a proper manner.

### SUMMARY

Exemplary embodiments may address at least the above problems and/or disadvantages and other disadvantages not described above. Also, the exemplary embodiments are not required to overcome the disadvantages described above, and an exemplary embodiment may not overcome any of the problems described above.

According to an aspect of an exemplary embodiment, a control device for remotely controlling an electronic apparatus includes: a communication part configured to communicate with the electronic apparatus; a first input interface on a first plate surface of the control device; a second input interface on a second plate surface of the control device, wherein the second plate surface faces opposite to the first plate surface; a position sensor configured to sense a position of the control device; and a controller configured to determine one of the first input interface and the second input interface that is directed toward a first direction and determine one of a first end part and a second end part on opposite sides of the control device in a longitudinal direction that is directed toward a second direction according to a position of the control device sensed by the position sensor, provide the first input interface or the second input interface that is determined to be directed toward the first direction, wherein a display direction of the first input interface or the second interface is determined based on one of the first end part and the second end part that is directed toward the second direction, and disable the first input interface or the second input interface which is determined to be not directed toward the first direction.

The first input interface may include a user interface (UI) image that is displayed on a first display unit installed on the first plate surface, and the second input interface may include a UI image that is displayed on a second display unit installed on the second plate surface, and the controller may adjust upper and lower directions of the UI image that is displayed on the first display unit or the second display unit based on the first end part or the second end part that is directed toward the second direction.

The control device may further include a first touch sensor configured to sense a touch on the first display unit and a second touch sensor configured to sense a touch on the second display unit, wherein the controller may disable the first touch sensor and enable the second touch sensor when it is determined that the first display unit is not directed toward the first direction and the second display unit is directed toward the first direction.

The first and the second plate surfaces may be substantially in parallel with the longitudinal direction of the control device.

The first direction may be substantially perpendicular to the second direction.

At least one of the first and second input interfaces may include a plurality of buttons for generating a plurality of commands in response to a user input, and the controller may adjust mapping of the plurality of commands with respect to the plurality buttons based on the first end part or the second end part that is determined to be directed toward the second direction.

At least one of the first and the second input interfaces may include a plurality of buttons, and a first profile which maps a plurality of commands to the plurality of buttons may be applied to a case where the first end part is directed toward the second direction, and a second profile which maps the plurality of commands to the plurality of buttons may be applied to a case where the second end part is directed toward the second direction.

The control device may further include a transparent display, wherein the controller may control a display direction of an UI image on the transparent display corresponding to one of the first and the second plate surfaces that is determined to be directed toward the first direction.

The control device may further include a first touch sensor configured to sense a touch on a first surface of the transparent display and a second touch sensor configured to sense a touch on a second surface of the transparent display, wherein the second surface faces opposite to the first surface , wherein the controller may disable the first touch sensor and enable the second touch sensor when it is determined that the first surface is not directed toward the first direction and the second surface is directed toward the first direction.

According to an aspect of another exemplary embodiment, a control method of a control device for remotely controlling an electronic apparatus includes: sensing a position of the control device; determining one of a first input interface on a first plate surface of the control device and a second input interface on a second plate surface that is directed toward a first direction, wherein the second plate surface faces opposite to the first plate surface; determining one of a first end part and a second end part on opposite sides of the control device in a longitudinal direction that is directed toward a second direction; and providing the first input interface or the second input interface that is determined to be directed toward the first direction, wherein a display direction of the first input interface or the second interface is determined based on one of the first and the second end parts that is directed toward the second direction, and disabling the first input interface or the second input interface that is determined to be not directed toward the first direction.

The first input interface may include a UI image that is displayed on a first display unit installed on the first plate surface, and the second input interface may include a UI image that is displayed on a second display unit installed on the second plate surface, and the providing may include adjusting upper and lower directions of the UI image that is displayed on the first display unit or the second display unit based on the first end part or the second end part that is directed toward the second direction.

The control method may further include sensing, by using a first touch sensor, a touch on the first display unit and sensing, by using a second touch sensor, a touch on the second display unit, and the disabling may include disabling the first touch sensor and enabling the second touch sensor when it is determined that the first display unit is not directed toward the first direction and the second display unit is directed toward the first direction.

The first and second plate surfaces may be substantially in parallel with the longitudinal direction of the control device.

The first direction may be substantially perpendicular to the second direction.

At least one of the first and the second input interfaces may include a plurality of buttons for generating a plurality of commands in response to a user input, and the providing may include adjusting mapping of the plurality of commands with respect to the plurality buttons based on the first end part or the second end part that is determined to be directed toward the second direction.

At least one of the first and the second input interfaces may include a plurality of buttons, and the providing may include applying a first profile which maps a plurality of commands to the plurality of buttons to a case where the first end part is directed toward the second direction, and a second profile which maps the plurality of commands to the plurality of buttons to a case where the second end part is directed toward the second direction.

The control method may further include providing a transparent display, and the providing the first input interface or the second input interface that is determined to be directed toward the first direction may include controlling a display direction of an UI image on the transparent display corresponding to one of the first and the second plate surfaces of the control device that is determined to be directed toward the first direction.

The control method may further include sensing, by using a first touch sensor, a touch on a first surface of the transparent display and sensing, by using a second touch sensor, a touch on a second surface of the transparent display, wherein the second surface faces opposite to the first surface, and the disabling may include disabling the first touch sensor and enabling the second touch sensor when it is determined that the first surface is not directed toward the first direction and the second surface is directed toward the first direction.

According to an aspect of still another exemplary embodiment, a system includes: an electronic apparatus; a control device configured to remotely control the electronic apparatus, wherein the control device includes a communication part configured to communicate with the electronic apparatus; a first input interface on a first plate surface of the control device; a second input interface on a second plate surface of the control device, wherein the second plate surface faces opposite to the first plate surface; a position sensor configured to sense a position of the control device; and a controller configured to determine one of the first input interface and the second input interface that is directed toward a first direction and determines one of a first end part and a second end part on opposite sides of the control device in a longitudinal direction that is directed toward a second direction according to a position of the control device sensed by the position sensor, provide the first input interface or the second input interface that is determined to be directed toward the first direction, wherein a display direction of the first input interface or the second interface is determined based on one of the first end part and the second end part that is directed toward the second direction, and disable the first input interface or the second input interface which is determined to be not directed toward the first direction.

According to an aspect of still another exemplary embodiment, a control device for remotely controlling an electronic apparatus includes a plurality of keys on a surface of the control device, wherein the plurality of keys are respectively mapped to a plurality of control functions of the electronic apparatus and a controller configured to generate a plurality of commands for performing corresponding control functions in response to a user input through the plurality of control keys, wherein the controller adjusts a mapping between the plurality of keys and the plurality of control functions based on a positioning of the control device with respect to the electronic apparatus.

When the positioning of the control device with respect to the electronic apparatus changes, the controller may adjust the mapping such that the control functions are mapped to the keys in the same relative up, down, left, and right directions toward the electronic apparatus.

The control device may further include a display unit on the surface of the control device, wherein the plurality of keys are provided in a user interface displayed on the display unit and the controller controls a display direction of the plurality of keys in the user interface based on the positioning of the control device with respect to the electronic apparatus.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates an example of a system according to an exemplary embodiment;
FIG. 2 is a perspective view showing a control device according to an exemplary embodiment;
FIG. 3 is a block diagram of the control device in FIG. 2;
FIG. 4 illustrates an example of the control device in FIG. 2 that provides a user input interface according to a position of the control device;
FIG. 5 is a control flowchart showing a control method of the control device in FIG. 2;
FIG. 6 is a perspective view of a control device according to another exemplary embodiment;
FIG. 7 is a control flowchart showing a control method of the control device in FIG. 6;
FIG. 8 is a perspective view of a control device according to still another exemplary embodiment;
FIG. 9 is a block diagram of the control device in FIG. 8; and
FIGS. 10 and 11 are control flowcharts showing a control method of the control device in FIG. 8.

### DETAILED DESCRIPTION

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

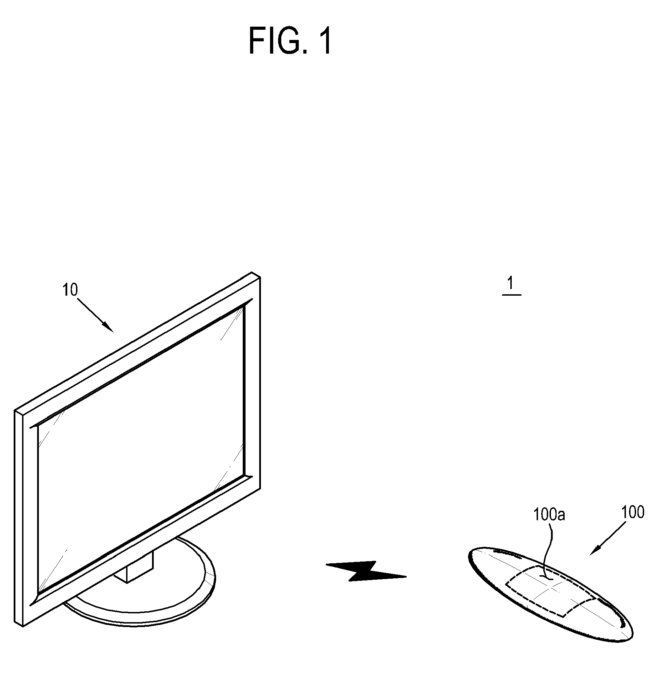

FIG. 1 illustrates an example of a system 1 according to an exemplary embodiment.

Referring to FIG. 1, the system 1 according to an exemplary embodiment includes an electronic apparatus 10 and a control device 100 that may control the electronic apparatus 10 remotely. Although it is described that the system 1 includes one electronic apparatus 10 and one control device 100 in this exemplary embodiment, the system 1 may include the control device 100 that controls a plurality of electronic apparatuses 10 or a plurality of control devices 100 that controls the electronic apparatus 10.

The electronic apparatus 10 according to an exemplary embodiment includes, for example, a television (TV). The type and features of the electronic apparatus 10 are not limited thereto and a typical electronic apparatus such as an electronic home appliance, an audio/video (A/V) device, a personal computer (PC), and a mobile device may apply.

The control device 100 generates a control signal according to a user's manipulation and transmits the generated control signal to the electronic apparatus 10 to control the electronic apparatus 10. The control device 100 may transmit the control signal to the electronic apparatus 10 in a wireless manner. The control device 100 has a shape and a size such that a user may grip the control device 100 with one hand.

The control device 100 includes various types of user input interfaces 100a to receive the user's manipulation. The user input interface 100a collectively refers to elements which are provided to cause the control device 100 to generate the control signal corresponding to the user's manipulation. The type of the user input interface 100a is not limited, and may include, e.g., a mechanical or electronic button or a graphic user interface (GUI) that is displayed as an image.

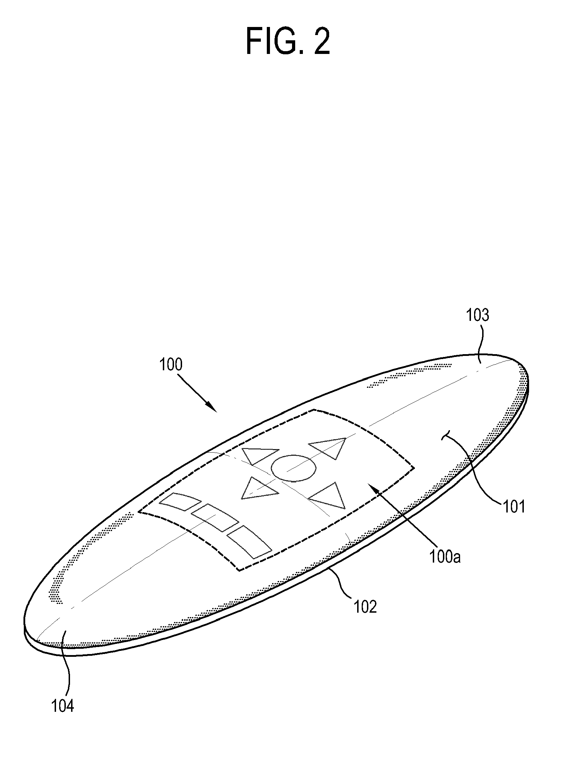

FIG. 2 is a perspective view of a control device according to an exemplary embodiment.

Referring to FIG. 2, the control device 100 is shaped as a streamlined plate that is elongated in a predetermined direction. The control device 100 includes an upper plate 101 which provides an upper surface of the control device 100, a lower plate 102 which provides a lower surface of the control device 100, which faces the upper plate 101, a first end part 103 which provides a first end portion of the control device 100 in a lengthwise direction, and a second end part 104 which provides a second end portion of the control device 100 in the lengthwise direction.

The terms "the upper plate", "the lower plate", "the first end part" and "the second end part" are given for illustrative purposes only to describe each part of an external appearance of the control device 100. The shape of the control device 100 explained above is only an example and is not limited thereto.

Since the control device 100 is elongated in a predetermined direction, a user may easily grip the control device 100 with one hand. A method of gripping the control device 100 which is shaped as above by a user is described below.

When a user grips one of the first and second end parts 103 and 104 of the control device 100 and directs the control device 100 toward the electronic apparatus 100 which is a subject to be controlled by the control device 100, the other one of the first and the second end parts 103 and 104 that is not gripped by a user faces the electronic apparatus 100. For example, when a user grips the second end part 104 of the control device 100, the first end part 103 faces the electronic apparatus 10 to be controlled by the control device 100.

In this case, one of the upper and the lower plates 101 and 102 faces a user. When the upper plate 101 faces a user, the user input interface 100a may be provided on the upper plate 101 so that a user may easily access and manipulate the control device 100.

For illustrative purposes, based on the control device 100, a direction which is directed toward a user is called an "upper direction" and a direction which is opposite to the upper direction and is directed toward the ground is called a "lower direction". For example, when a user grips the control device 100 to direct the upper plate 101 thereof toward the user, the upper plate 101 is directed toward the upper direction and the lower plate 102 is directed toward the lower direction.

For illustrative purposes, based on the control device 100, a direction which is directed toward the electronic apparatus 10 that is a subject to be controlled is called a "front direction" and a direction which is opposite to the front direction is called a "back direction". For example, when the user grips the second end part 104, the first end part 103 is directed toward the front direction and the second end part 104 is directed toward the back direction.

However, there may exist a case where, when a user initially grips the control device 100, the first end part 103 is not directed toward the front direction and the upper plate 101 is not directed toward the upper direction. For example, a user may grip the second end part 104 and the lower plate 102 is directed toward a user, or a user may grip the first end part 103 and the upper plate 101 is directed toward a user, or a user may grip the first end part 103 and the lower plate 102 is directed toward a user.

In a related art control device, a fixed type of the user input apparatus 100a is provided on the upper plate 101 in a direction toward the first end part 103. In this case, when the user fails to grip the control device 100 in a certain direction to normally view the user input interface 100a, a user needs to rotate the control device 100 and grip the control device 100 again to normally view the user input interface 100a.

To overcome the foregoing problem, exemplary embodiments will be suggested and described in detail.

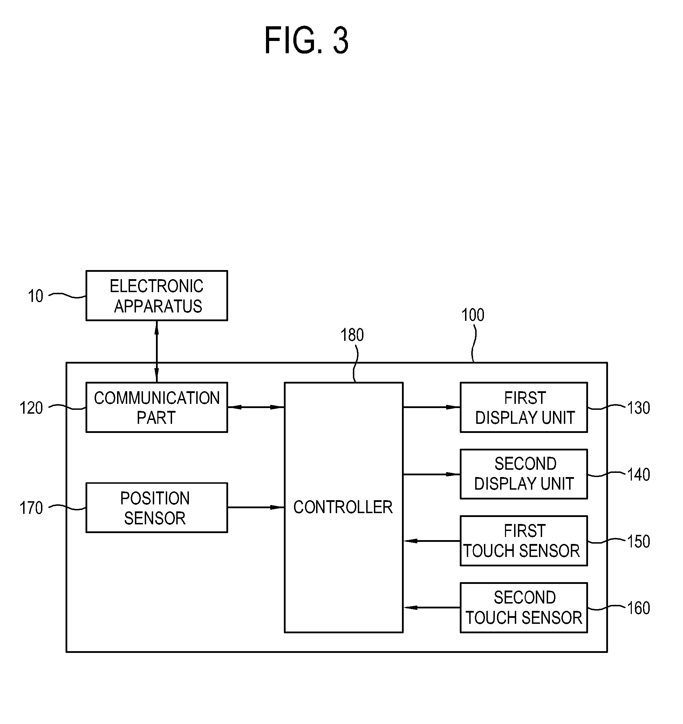

FIG. 3 is a block diagram of the control device 100 according to an exemplary embodiment.

Referring to FIG. 3, the control device 100 includes a communication part 120 which communicates with the electronic apparatus 10, a first display unit 130 and a second display unit 140 capable of displaying various images, a first touch sensor 150 which senses a touch on the first display unit 130, a second touch sensor 160 which senses a touch on the second display unit 140, a position sensor 170 which senses a position of the control device 100, and a controller 180 which controls overall operations of the control device 100.

The communication part 120 wirelessly transmits commands, data, information, or signals to the electronic apparatus 10. The communication part 120 may have unilateral communication with the electronic apparatus 10 to transmit, e.g., a signal to the electronic apparatus 10. The communication part 120 may also have interactive communication with the electronic apparatus 10 such that the communication part 120 receives, e.g., a signal from the electronic apparatus 10 and transmits the signal to the controller 180. The communication part 120 may employ wireless communication standards such as infrared (IR), radio frequency (RF), Zigbee or Bluetooth to ensure communication between the control device 100 and the electronic apparatus 10.

The first display unit 130 is installed in the upper plate 101 (Refer to FIG. 2) and displays various types of user interfaces (UI) thereon. The first display unit 130 may be implemented in various manners including, e.g., using liquid crystal. In an exemplary embodiment, fine light-emitting diodes (LED) (not shown) are arranged below the upper plate 101, and light is emitted by the LED to the outside through fine holes formed on the upper plate 101 to implement the first display unit 130 that displays a preset UI.

The first display unit 130 displays a screen of a user input interface that may be manipulated by a user, according to a control of the controller 180. The screen of the user input interface may include, e.g., a plurality of button images that is spaced apart from each other, and the display type is not limited thereto.

Except for being installed on the lower plate 102 (refer to FIG. 2), other basic configurations of the second display unit 140 are similar to that of the first display unit 130. That is, the first and the second display units 130 and 140 are arranged in opposite directions, and thus when a screen displayed on the first display unit 130 is directed toward the upper direction, a screen displayed on the second display unit 140 is directed toward the lower direction.

The first touch sensor 150 senses a user's touch to the first display unit 130. The touch sensed by the first touch sensor 150 includes, e.g., contact on a predetermined location of the first display unit 130 with a user's finger, dragging a predetermined distance on the first display unit 130 with a user's finger after touching a predetermined location of the first display unit 130, and tapping a predetermined location of the first display unit 130.

The first touch sensor 150 senses whether a user touches or taps the first display unit 130, and may sense a change of a touch coordinate and a degree of change when the user drags on the first display unit 130.

Except for sensing a user's touch on the second display unit 140, basic configurations of the second touch sensor 160 are similar to that of the first touch sensor 150.

The position sensor 170 senses a current position of the control device 100. Based on three-dimensional space coordinates including a width, a depth and a height of the sensed position, the position sensor 170 determines which of the upper and lower plates 101 and 102 of the control device 100 is in the upper direction and which of the first and the second end parts 103 and 104 is in the front direction. Otherwise, the position sensor 170 may sense inclination, rotation and motion of the control device 100. To do so, the position sensor 170 may be implemented as, for example, a gyro sensor, a tilt sensor or an accelerometer.

The controller 180 displays a user input interface on the first display unit 130 or the second display unit 140, and generates and transmits a command to the communication part 120 corresponding to the sensing of the first and the second touch sensors 150 and 160.

For example, when the user's touch is sensed by the first touch sensor 150 while a user input interface is displayed on the first display unit 130, the controller 180 determines which part of the user input interface is touched. When it is determined that a volume down button in the user input interface is touched, the controller 180 transmits a control signal to instruct a volume down to the electronic apparatus 10 through the communication part 120.

In a case of a related art control device in which a user input interface is always displayed on the upper plate 101 toward the first end part 103, a user needs to change a gripping direction of the control device 100 to normally view the user input interface.

To resolve such inconvenience, the following method is suggested according to an exemplary embodiment.

The controller 180 determines which of the upper and the lower plates 101 and 102 is directed toward the upper direction and which of the first and the second end parts 103 and 104 is directed toward the front direction according to a position of the control device 100 that is sensed by the position sensor 170. The controller 180 provides a user input interface on one of the upper and the lower plates 101 and 102 that is directed toward the upper direction, based on one of the first and the second end parts 103 and 104 that is directed toward the front direction.

More specifically, the control device 100 may provide a first user input interface on the upper plate 101, and provide a second user input interface on the lower plate 102. With the foregoing configuration, the controller 180 determines which of the first and the second user input interfaces is directed toward the upper direction and which of the first and the second end parts 103 and 104 is directed toward the front direction, according to a position of the control device 100 that is sensed by the position sensor 170.

The controller 180 provides the first user input interface or the second user input interface which is determined to be directed toward the upper direction, based on one of the first and the second end parts 103 and 104 that is directed toward the front direction. The controller 180 disables the first or the second user input interface that is determined to be not directed toward the upper direction such that the user may not manipulate the disabled first or second user input interface.

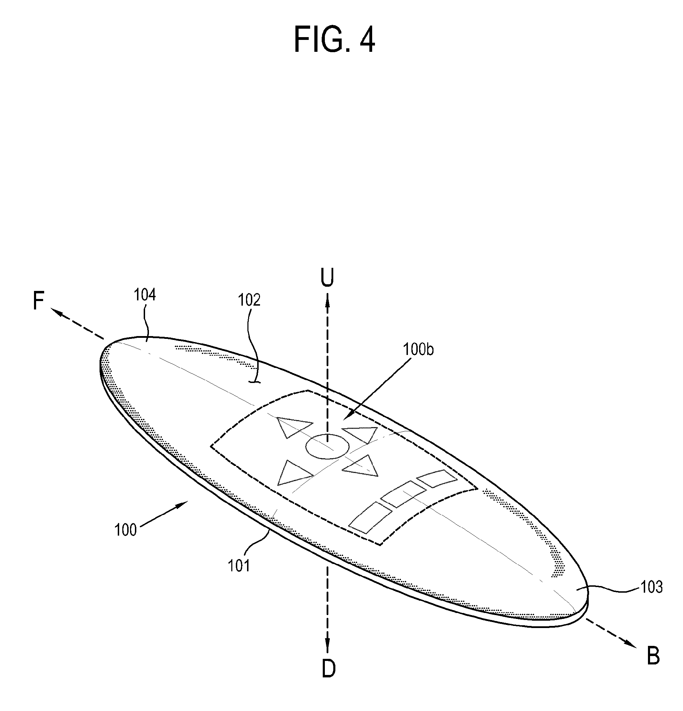

FIG. 4 illustrates an example of providing a user input interface on the control device 100 according to a position of the control device 100.

As shown in FIGS. 3 and 4, a user may grip the control device 100 while facing the lower plate 102. For example, a user may grip the first end part 103 of the control device 100. In such a case, the lower plate 102 is directed toward an upper direction U, the upper plate 101 is directed toward a lower direction D, the second end part 104 is directed toward a front direction F, and the first end part 103 is directed toward a back direction B.

The controller 180 senses a position of the control device 100 through the position sensor 170, and determines which part of the control device 100 is directed toward the upper direction U and the front direction F according to the sensing result.

When it is determined that the lower plate 102 is directed toward the upper direction U, the controller 180 displays a user input interface 100b on the second display unit 140 that is provided on the lower plate 102. Since the second end part 104 is determined to be directed toward the front direction F, the controller 180 displays the user input interface 100b such that upper and lower parts thereof are located on the basis of the second end part 104. The controller 180 enables the second touch sensor 160 so that the user input interface 100b may operate.

The upper and lower parts of the user input interface 100a needs to be controlled such that a user may recognize an image or a text included in the user input interface 100a. This is because the user input interface 100a which is upside down on the lower plate 102 may be recognized by a user when the first end part 103 or the second end part 104 that is directed toward the front direction is not sensed and the user input interface 100a is not displayed based on the sensing result.

With respect to the upper plate 101 that is determined to be directed toward the lower direction D, the controller 180 does not display the user input interface 100a on the first display unit 130 and disables the first touch sensor 150. In such a case, when the user puts the control device 100 on the floor so that the upper plate 101 is touched by the floor, an unwanted command may be prevented from being generated.

The user input interfaces 100a and 100b which are provided to the first and the second display units 130 and 140, respectively, may perform the same or different functions. Alternatively, the user input interface 100b that is provided on the second display unit 140 may perform a simpler function than the user input interface 100a on the first display unit 130.

According to an exemplary embodiment, regardless of how a user grips the control device 100, the control device 100 may display the user input interface in a direction such that a user may normally view the user input interface, based on a current position of the control device 100. As a result, user convenience may be enhanced.

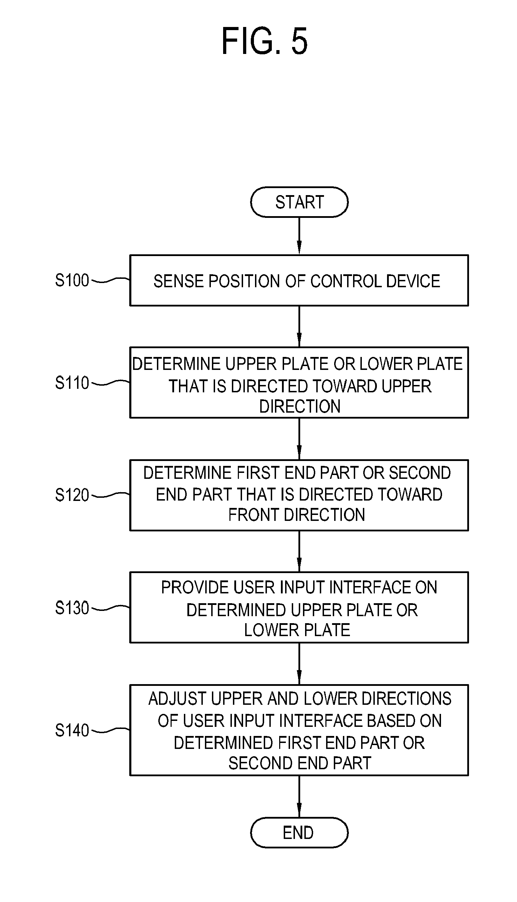

FIG. 5 is a control flowchart showing a control method of a control device according to an exemplary embodiment.

As shown in FIG. 5, the control device 100 may sense a current position of the control device 100 (S100). Based on the sensing result, the control device 100 may determine one of the upper and lower plates of the control device 100 that is directed toward the upper direction (S110), and determines one of the first and the second end parts of the control device 100 that is directed toward the front direction in a lengthwise direction of the control device 100 (S120).

The control device 100 provides the user input interface on the upper or the lower plate that is determined to be directed toward the upper direction (S130). The control device 100 adjusts the upper and lower directions of the displayed user input interface based on the first or second end part that is determined to be directed toward the front direction (S140). The upper direction of the user input interface refers to a direction which is directed to the upper or the lower plate that is determined to be directed toward the front direction.

The control device 100 does not provide the user input interface on the upper or the lower plate that is determined to be directed toward the lower direction.

According to an exemplary embodiment, regardless of how a user grips the control device 100, the user input interface of the control device 100 may be displayed in a manner that the user input interface is easily manipulated by a user.

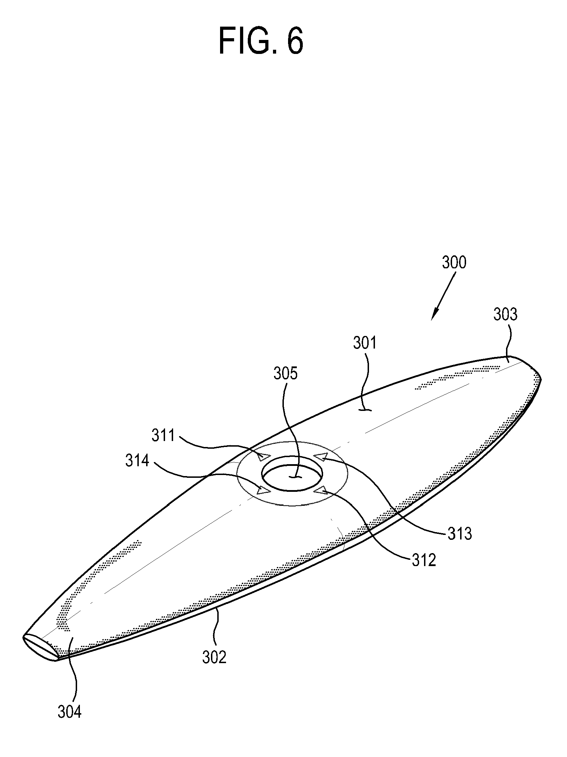

FIG. 6 is a perspective view of a control device 300 according to another exemplary embodiment.

As shown in FIG. 6, the control device 300 according to an exemplary embodiment is shaped as a plate that is elongated in a predetermined direction. Similarly to the exemplary embodiment shown in FIG. 2, the control device 300 according to an exemplary embodiment includes an upper plate 301 which provides an upper surface, a lower plate (not shown) which provides a lower surface, and a first end part 303 and a second end part 304 which provide opposite ends of the control device 300, respectively, in a lengthwise direction thereof.

The external appearance of the control device 300 is similar to that of the control device 100 shown in FIG. 2, except that the control device 300 according to another exemplary embodiment has a hole 305 that is provided on a central part of the upper and lower plates 301 and 302. Centering on the hole 305, a plurality of buttons 311, 312, 313 and 314 is installed on a surface of the upper plate 302 corresponding to up, down, left and right directions.

For example, the hole 305 has a diameter such that a user's finger may be inserted thereinto. A user may insert his or her finger into the hole 305 and easily carry the control device 300.

The buttons 311, 312, 313 and 314 may be installed only on the upper plate 301. Alternatively, the buttons 311, 312, 313 and 314 may be installed on the upper and lower plates 301 and 302, respectively, in a symmetrical structure.

When it is assumed that the first end part 303 is an upper side of the control device 300, the buttons 311, 312, 313 and 314 include a first button 311 provided on a left side, a second button 312 provided on a right side, a third button 313 provided on an upper side and a fourth button 314 provided on a lower side, relative to the hole 305. The aforementioned configuration of the buttons 311, 312, 313 and 314 is only an example and does not limit the disclosure. In this example, the first through the fourth buttons 311, 312, 313 and 314 are symmetrical to one another relative to the hole 305.

When a user controls an operation of a TV with the control device 300, the four buttons 311 to 314 may be generally mapped to the following control commands. Out of the four direction buttons 311 to 314, a left button may correspond to a channel down command, a right button may correspond to a channel up command, an up button may correspond to a volume up command, and a down button may correspond to a volume down command. Such correlation reflects a user's typical usage pattern.

In other words, a user's manipulation on the first button 311 may generate a command which instructs a change to a previous channel, a user's manipulation on the second button 312 may generate a command which instructs a change to a next channel, a user's manipulation on the third button 313 may generate a command which instructs a volume up, and a user's manipulation on the fourth button 314 may generate a command which instructs a volume down.

When a user desires to increase the volume of the TV while gripping the second end part 304, the user may simply click the third button 313.

However, in a case where a user grips the first end part 303, the third button 313 is located in the lower side and the fourth button 314 is located on the upper side. That is, locations of the third and fourth buttons 313 and 314 relative to a user are changed. In addition, locations of the first and the second buttons 311 and 312 relative to the user are changed.

When a user desires to increase the volume of a TV in this state, the user needs to click the fourth button 314 provided on the upper side. In a related art control device, the user may still need to click the third button 313 instead of the fourth button 314, which is inconvenient for the user to perform when the user grips the first end part 303.

Accordingly, the following method is suggested in an exemplary embodiment.

The control device 300 maps preset commands to the first through the fourth buttons 311, 312, 313 and 314. The control device 300 determines one of the first end part 303 and the second end part 304 that is directed toward the front direction by sensing a current position of the control device 300. The control device 300 adjusts the mapping of the respective commands corresponding to the respective buttons 311, 312, 313 and 314 according to the determination result.

For example, there may be a case where a command mapping profile is preset such that a left button corresponds to a channel down command, a right button corresponds to a change to a channel up command, an up button corresponds to a volume up command, and a down button corresponds to a volume down command. The command mapping profile may be stored in a database (not shown) and designates commands generated by an operation of clicking buttons.

For example, when it is determined that the first end part 303 is directed toward the front direction, the control device 300 maps the channel down command, the channel up command, the volume up command, and the volume down command to the first button 311, the second button 312, the third button 313, and the fourth button 314, respectively.

When it is determined that the second end part 304 is directed toward the front direction, the control device 300 adjusts the mapping of the commands so that the first button corresponds to the channel up command, the second button corresponds to the channel down command, the third button 313 corresponds to the volume down command, and the fourth button 314 corresponds to the volume up command.

Otherwise, the control device 300 stores in advance a command mapping profile which applies to a case where the user grips the control device 300 such that the first end part 303 is directed toward the front direction, and a command mapping profile which applies to a case where the user grips the control device 300 such that the second end part 304 is directed toward the front direction. The control device 30 determines which of the first and the second end parts 303 and 304 is directed toward the front direction, and may call and apply a corresponding command mapping profile according to the determination result.

As above, a user may intuitively manipulate the buttons to perform a desired control operation of the electronic apparatus regardless of which of the first and the second end parts 303 and 304 is gripped by the user. Therefore, user convenience in manipulating the control device 300 may be enhanced.

Display units (not shown) which are configured similarly to the first and the second display units 130 and 140 in FIG. 3 may be installed on the upper plate 301 and the lower plate 302. In this case, a display mode of a UI that is displayed on the display units may be adjusted according to a position of the control device 300 as already described with reference to FIGS. 2 and 4. Thus, a detailed description thereof will be omitted.

Although it is described that the buttons 311, 312, 313 and 314 are provided on the upper plate 301, buttons with the same or similar configuration as those of the buttons 311, 312, 313 and 314 may also be provided on the lower plate 302. In this case, the control device 300 determines one of the upper plate 301 and the lower plate 302 that is directed toward the upper direction similarly to the previous exemplary embodiment, and the aforementioned control method of the control device 300 applies to the buttons 311, 312, 313 and 314 provided on the upper plate 301 or the buttons on the lower plate 302 according to the determination result. The control device 300 may disable the buttons 311, 312, 313 and 314 provided on the upper plate 301 or the lower plate 302 that is determined to be directed toward the lower direction such that the buttons 311, 312, 313 and 314 are not manipulated by a user.

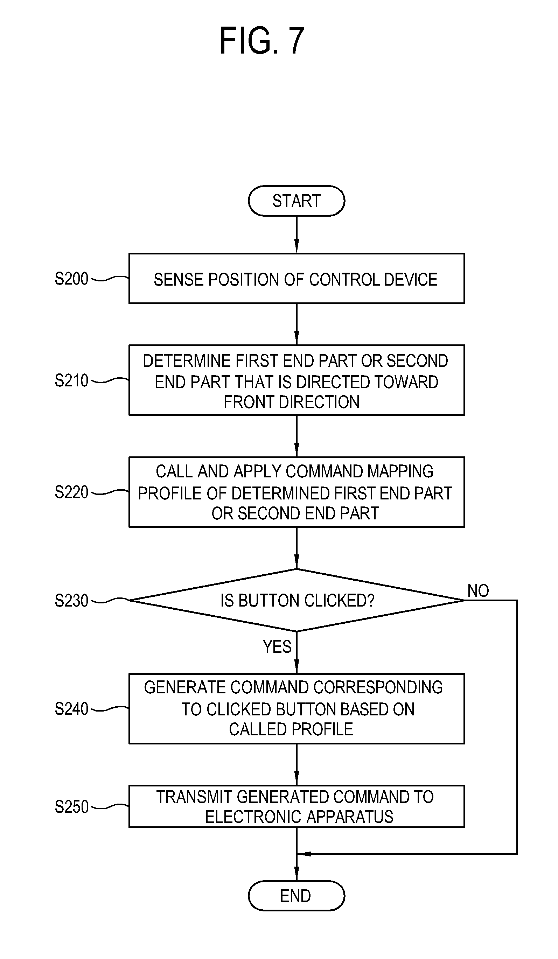

Hereinafter, a control method of a control device according to an exemplary embodiment will be described with reference to FIG. 7.

FIG. 7 is a control flowchart showing a control method of the control device 300. As explained above, is the control device 300 may have an initial state in which command mapping profiles are set in advance to be applied to a case where the user grips the control device 300 such that the first end part 303 of the control device 300 is directed toward the front direction and to a case where the user grips the control device 300 such that the second end part 304 is directed toward the front direction.

As shown in FIG. 7, the control device 300 senses a current position of the control device 300 (S200). The control device 300 determines which of the first and the second end parts 303 and 304 is directed toward the front direction, based on the sensing result (S210).

The control device 300 calls and applies a corresponding command mapping profile of one of the first and the second end parts 303 and 304 that is determined to be directed toward the front direction (S220).

When a user clicks a button on the control device 300 (S230), the control device 300 generates a command corresponding to the clicked button based on the called command mapping profile (S240). The control device 300 transmits the generated command to the electronic apparatus 10 to control the electronic apparatus 10 according to the command (S250).

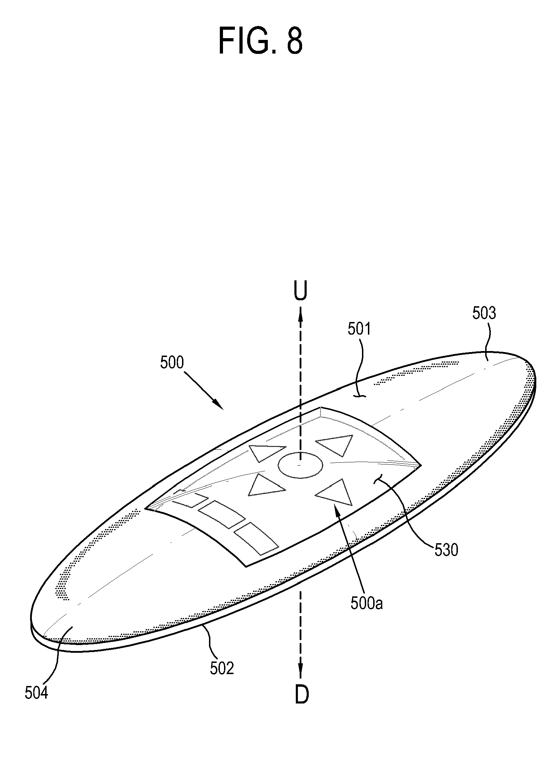

FIG. 8 is a perspective view of a control device 500 according to still another exemplary embodiment.

As shown in FIG. 8, the control device 500 according to an exemplary embodiment is shaped as a plate that is elongated in a predetermined direction, and includes an upper plate 501, a lower plate 502, a first end part 503 and a second end part 504, similarly to the previous exemplary embodiments.

The control device 500 further includes a transparent display 530. The transparent display 530 is installed on the control device 500 to pass light through the upper and the lower plates 501 and 502. The control device 500 may display a user input interface 500a that is provided on the transparent display 530 to be manipulated by a user.

Due to the nature of the transparent display 503 that passes external light therethrough, a user may view the user input interface 500a that is displayed on the transparent display 503, from an upper direction U and a lower direction D. However, when the user input interface 500a is displayed on the basis of the upper direction U, i.e., when the user input interface 500a is displayed to be normally viewed by a user from the upper direction U, the same screen would be reversely viewed by a user from the lower direction D.

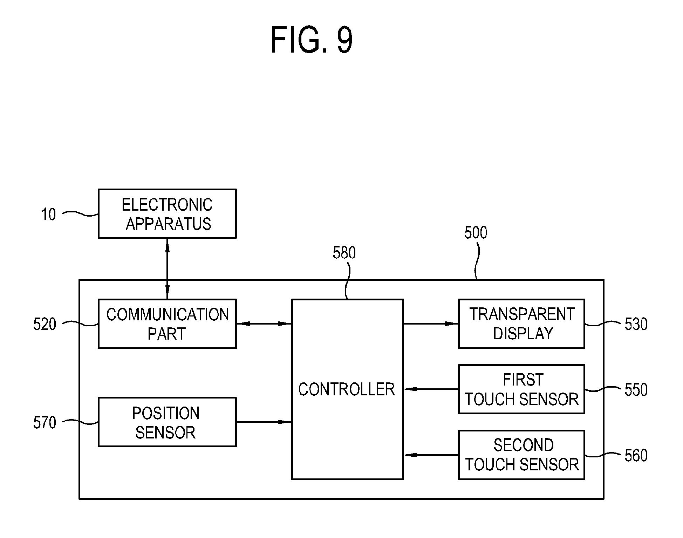

FIG. 9 is a block diagram of the control device 500.

The control device 500 includes a communication part 520, the transparent display 520, a first touch sensor 550, a second touch sensor 560, a position sensor 570 and a controller 580. The configuration of the communication part 520 and the position sensor 570 may employ the same or similar configuration to FIG. 3 and thus will not be explained in detail.

The transparent display 530 may display various types of UI screens by a control of the controller 580. The transparent display 530 may include, for example, an organic light emitting diode (OLED) to emit light by itself and display an image thereon, or may not include any light emitting element and display an image by using an external light.

The first touch sensor 550 senses a user's touch on a surface of an upper plate 501. The second touch sensor 560 senses a user's touch on a surface in the lower plate 502. That is, the first touch sensor 550 senses a touch on an upper surface of the transparent display 530, and the second touch sensor 560 senses a touch on a lower surface of the transparent display 530.

The controller 580 determines one of the upper and lower surfaces of the transparent display 530 that is directed toward the upper direction, and determines one of a first end part 503 and a second end part 504 that is directed toward the front direction based on a position of the control device 500 that is sensed by the position sensor 570. The controller 580 displays a user input interface on the transparent display 530 based on the determination result.

For example, the controller 580 may display a user input interface to be normally recognized by a user when the upper surface of the transparent display 530 is directed toward the upper direction. The controller 580 adjusts and displays the upper and lower sides of the user input interface based on the first end part 503 or the second end part 504 that is directed toward the front direction.

Here, the controller 580 may enable the first touch sensor 550 to sense a touch on the upper surface of the transparent display 530, and disable the second touch sensor 560 not to sense a touch on the lower surface of the transparent display 530.

When the lower surface of the transparent display 530 is directed toward the upper direction, the controller 580 reverses and displays the user input interface to be normally recognized by a user. That is, when the user input interface is displayed on the basis of the upper surface of the transparent display 530 in this case, the user input interface is displayed on the basis of the lower surface of the transparent display 530.

The controller 580 adjusts the upper and the lower directions of the user input interface, and displays the adjusted user input interface based on one of the first end part 503 and the second end part 504 that is directed toward the front direction.

Here, the controller 580 may enable the second touch sensor 560 to sense a touch on the lower surface of the transparent display 530, and disable the first touch sensor 550 not to sense a touch on the upper surface of the transparent display 530.

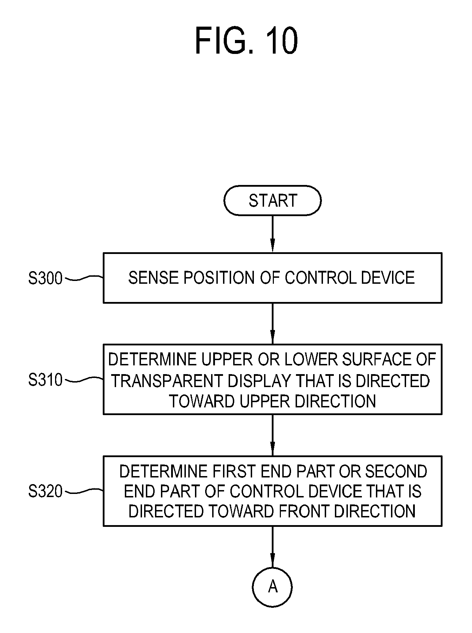

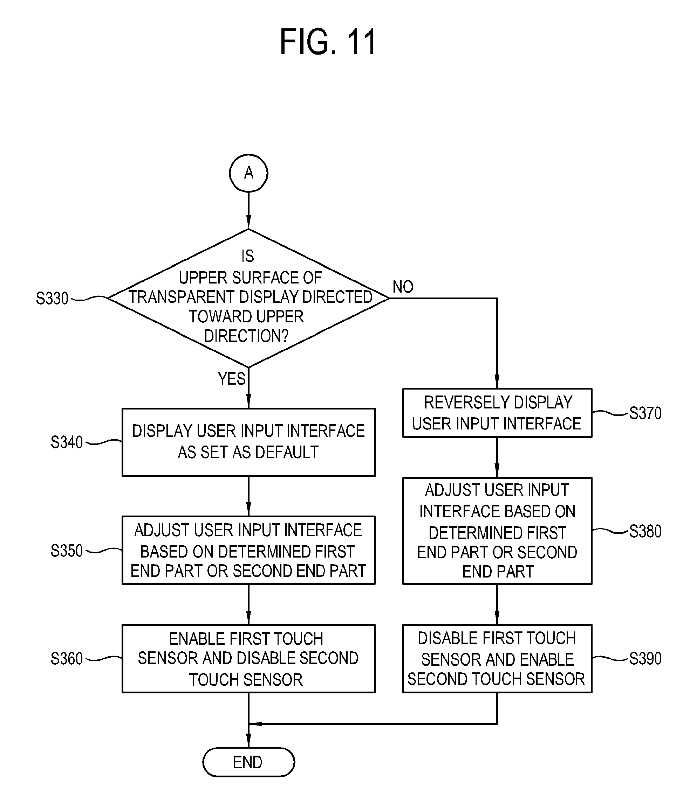

FIGS. 10 and 11 are flowcharts showing a control method of the control device 500 according to an exemplary embodiment. In an exemplary embodiment, the control device 500 has an initial state in which the control device 500 displays a UI based on an upper surface of the transparent display 530.

As shown in FIGS. 9, 10 and 11, the control device 500 senses a current position of the control device 500 (S300). The control device 500 determines whether the upper surface of the transparent display 530 is directed toward the upper direction according to the sensing result (S310), and determines which of the first end part 503 and the second end part 504 is directed toward the front direction (S320).

When it is determined that the upper surface of the transparent display 530 is directed toward the upper direction (S330), the control device 500 displays the user input interface, e.g., a default input interface, on the transparent display 530 (S340), and adjusts the upper and lower directions of the user input interface based on the determined first end part 503 or the second end part 504 (S350). The control device 500 may enable the first touch sensor 550 and disable the second touch sensor 560 (S360).

When it is determined that the lower surface of the transparent display 530 faces the upper direction (S330), the control device 500 reverses the user input interface from default setting and displays the reversed user input interface on the transparent display 530 (S370). Also, the control device 500 adjusts the upper and lower directions of the user input interface based on the determined first end part 503 or the second end part 504 (S380). The control device 500 may disable the first touch sensor 550 and enable the second touch sensor 560 (S390).

In the foregoing exemplary embodiments, it has been explained that the "upper direction" means the direction that is directed toward a user and the "front direction" means the direction that is directed toward the electronic apparatus controlled by the control device. However, such directions may be changed in implementing the spirit of the disclosure.

For example, the "lower direction" may be defined as a direction in which gravity acts, and the "upper direction" may be defined as a direction against which gravity acts. Otherwise, the "lower direction" may be defined as a direction that is directed toward the ground and the "upper direction" may be defined as a direction that is directed toward the sky.

Further, the end part that is relatively on an upper side, out of two opposite end parts of the control device in a lengthwise direction, may be defined as being located in the "front direction", and the other end part that is relatively on a lower side may be defined as being located in the "back direction". This is because the end part gripped by a user is located lower than the other end part that is not gripped by a user when a user grips the control device. The upper and lower sides are identified on the basis of the ground.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. A control device for remotely controlling an electronic apparatus, the control device comprising:
a communication part configured to communicate with the electronic apparatus;
a first input interface configured to be provided on a first plate surface of the control device to be manipulated by a user;
a second input interface configured to be provided on a second plate surface of the control device that is arranged in an opposite direction of the first plate surface to be manipulated by the user;
a position sensor configured to sense a position of the control device; and
a controller configured to determine one of the first input interface and the second input interface that is directed toward a preset first direction and configured to determine one of a first end part and a second end part that is directed toward a preset second direction on opposite sides in a lengthwise direction of the control device according to a position of the control device sensed by the position sensor, configured to provide the first input interface or the second input interface that is determined to be directed toward the preset first direction based on one of the first end part and the second end part that is directed toward the second direction, and configured to disable the first input interface or the second input interface which is determined to be not directed toward the first direction, not to be manipulated by the user.

2. The control device according to claim 1, wherein the first input interface comprises a user interface (UI) image that is displayed on a first display unit installed on the first plate surface, and the second input interface comprises a UI image that is displayed on a second display unit installed on the second plate surface, and the controller adjusts upper and lower directions of the UI image that is displayed on the first display unit or the second display unit for the UI image to be displayed on the basis of the first end part or the second end part that is directed toward the second direction.

3. The control device according to claim 1, further comprising a first touch sensor which senses a touch on the first display unit and a second touch sensor which senses a touch on the second display unit, wherein the controller disables the first touch sensor and enables the second touch sensor if it is determined that the first display unit is not directed toward the first direction and the second display unit is directed toward the first direction.

4. The control device according to claim 1, wherein the first and second plate surfaces are in parallel with the lengthwise direction of the control device.

5. The control device according to claim 1, wherein the first direction is perpendicular to the second direction.

6. The control device according to claim 1, wherein at least one of the first and second input interfaces comprises a plurality of buttons that is set as default corresponding to a plurality of preset commands to generate the commands if the user clicks the buttons, and the controller maintains the default setting if the first end part is determined to be directed toward the second direction, and reverses the mapping of the plurality of commands with respect to the plurality buttons from the default setting if the second end part is determined to be directed toward the second direction.

7. The control device according to claim 1, wherein at least one of the first and second input interfaces comprises a plurality of buttons, and a first profile which maps a plurality of preset commands to the plurality of buttons is stored in advance to apply to a case where the first end part is directed toward the second direction, and a second profile which maps a plurality of commands to the plurality of buttons is stored in advance to apply to a case where the second end part is directed toward the second direction, and the controller calls and maps the first or second profile to the plurality of buttons corresponding to the first end part or the second end part that is determined to be directed toward the second direction.

8. The control device according to claim 1, further comprising a transparent display, wherein the controller selectively reverses and displays the UI image corresponding to one of the first and second plate surfaces that is determined to be directed toward the first direction.

9. The control device according to claim 8, further comprising a first touch sensor which senses a touch on a first surface of the transparent display and a second touch sensor which senses a touch on a second surface that is in an opposite direction of the first surface of the transparent display, wherein the controller disables the first touch sensor and enables the second touch sensor if it is determined that the first surface is not directed toward the first direction and the second surface is directed toward the first direction.

10. A system comprising:
an electronic apparatus;
a control device according to any one of claims 1 to 9, configured to remotely control the electronic apparatus.

11. A control method of a control device for remotely controlling an electronic apparatus, the control method comprising:
sensing a position of the control device;
determining one of a first input interface provided on a first plate surface of the control device and a second input interface provided on a second plate surface in an opposite direction to the first plate surface, that is directed toward a preset first direction;
determining one of a first end part and a second end part that is directed toward a preset second direction along a lengthwise direction of the control device; and
providing the first input interface or the second input interface that is determined to be directed toward the first direction, based on the one of the first and second end parts that is directed toward the second direction, and disabling the first input interface or the second input interface that is determined to be not directed toward the first direction, not to be manipulated by a user.
